# FASCICULE DE BREVET EUROPEEN

(11) **EP 3 380 823 B1**
(45) Date de publication et mention de la délivrance du brevet: **11.10.2023**
(21) Numéro de dépôt: 16797593.7
(22) Date de dépôt: 24.10.2016
(51) Int. Cl.: G01L 13/02, G01L 19/14, G01L 19/06

(54) **CAPTEUR DE PRESSION DIFFERENTIELLE**
DIFFERENZDRUCKSENSOR
DIFFERENTIAL PRESSURE SENSOR

(30) Priorité: 24.11.2015 FR 1561305
(43) Date de publication de la demande: 03.10.2018
(73) Titulaire: Valeo Systèmes de Contrôle Moteur, 95800 Cergy Saint-Christophe (FR)
(72) Inventeur: ZAKRZEWSKI, Piotr, 78260 Acheres (FR); GUEGUEN, Olivier, 14210 Baron sur Odon (FR); GELEZ, Nicolas, 78230 Le Pecq (FR)
(74) Mandataire: Valeo Powertrain Systems
(86) Numéro de dépôt international: PCT/FR2016/052757
(87) Numéro de publication internationale: WO 2017/089667

(56) Documents cités:
- EP-A1- 3 365 649
- EP-A2- 2 657 669
- EP-A2- 3 304 021
- US-A- 5 747 694
- US-A1- 2009 151 464

## Description

### Domaine technique

La présente invention concerne un dispositif de mesure de pression différentielle, et plus particulièrement pour mesurer des pressions de gaz corrosifs, notamment de gaz d'échappement des véhicules automobiles.

### Art antérieur

Un dispositif de mesure de pression différentielle comprend classiquement une membrane dont chacune des faces est exposée à une pression différente. La différence de pressions déforme la membrane et le dispositif de mesure renvoie un signal, le plus souvent électrique, en fonction de cette déformation.

Les documents US 5 747 694 A, US 2009/151464 A1, EP 2 657 669 A2, EP 3 365 649 A1 et EP 3 304 021 A2 présentent des exemples de dispositifs de mesure de pression connus dans l'art antérieur.

Lorsqu'une des pressions est celle d'un gaz corrosif, il est nécessaire de protéger les composants électroniques, mais aussi d'utiliser un substrat pour le circuit électronique qui soit sensiblement inerte vis-à-vis du gaz.

La protection des composants électroniques nécessite de les isoler dans une chambre spécifique, ce qui pose des problèmes d'étanchéité.

Par ailleurs, les substrats céramiques sont chers.

Il existe donc un besoin pour un dispositif de mesure de pression apte à mesurer la pression d'un gaz corrosif qui ne présente pas ces inconvénients. Un but de l'invention est de répondre, au moins partiellement, à ce besoin.

### Résumé de l'invention

L'invention propose un dispositif de mesure de pression différentielle tel que défini dans la revendication 1.

Comme on le verra plus en détail dans la suite de la description, dans un dispositif de mesure selon l'invention, le substrat est protégé des gaz corrosifs par la résine. Le recours à un substrat céramique n'est donc plus indispensable.

En outre, la résine recouvre les composants électroniques du capteur de pression. Aucune chambre spécifique n'est donc plus nécessaire. Le dispositif de mesure de pression différentielle selon l'invention peut être ainsi fabriqué de manière simple et peu coûteuse.

L'invention a également pour objet un procédé de régulation d'un taux de recirculation de gaz d'échappement comprenant un dispositif selon l'invention.

### Brève description des figures

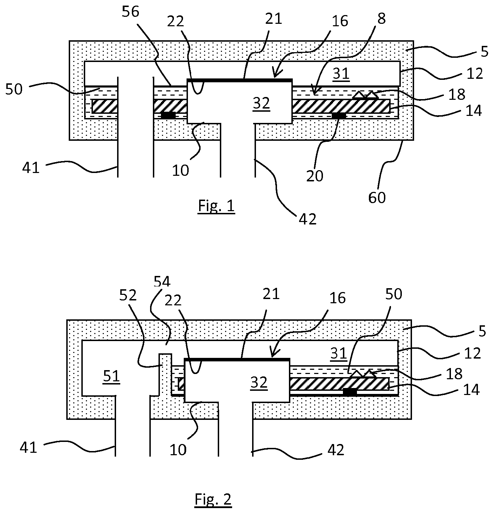

L'invention pourra être mieux comprise à la lecture de la description détaillée qui va suivre et à l'examen du dessin annexé sur lequel les figures 1 et 2 représentent schématiquement deux modes de réalisation d'un dispositif de mesure de pression différentielle. La figure 1 illustre un mode de réalisation qui n'est pas couvert par les revendications. La figure 2 illustre un mode de réalisation couvert par les revendications.

### Description détaillée

Les figures 1 et 2 illustrent un dispositif comprenant un boitier 5 et un capteur de pression 8, disposé dans une cavité 12 définie par le boîtier 5.

Le boitier 5 est de préférence réalisé en matériau plastique mais peut, en variante, être métallique. Il peut être par exemple de forme générale parallélépipédique.

Le capteur de pression 8 comporte un substrat 14 portant un circuit électronique de mesure de la pression, et en particulier portant classiquement un organe de mesure 10 pourvue d'une membrane 16, et des composants électroniques 18.

Le substrat 14, de préférence sensiblement plan, peut être en une matière quelconque, par exemple en FR4. Le substrat 14 est posé sur le fond de la cavité 12, de préférence par l'intermédiaire de plots 20.

La cavité 12 est partiellement remplie de résine 50, par exemple d'une résine de type polyimide, de manière à recouvrir, et ainsi protéger le substrat 14, mais sans recouvrir la membrane 16.

La résine recouvre également, de préférence, les composants électroniques 18 du capteur de pression.

Avantageusement, tous les constituants du capteur de pression sont ainsi disposés dans une même cavité. Les composants électroniques 18 n'ont donc pas besoin d'être isolés dans une chambre spécifique, ce qui évite les problèmes liés à l'étanchéité entre la chambre contenant l'organe de mesure 10 et cette chambre spécifique.

L'organe de mesure 10 est de préférence adaptée à la mesure de pressions comprises entre 10 et 400 kPa.

La membrane 16 définit des première et deuxième grandes faces 21 et 22, respectivement. Le capteur de pression 8 est conçu pour comparer les première et deuxième pressions exercées sur les première et deuxième faces, respectivement, et pour envoyer vers un module de traitement, non représenté, un signal électrique en fonction de la différence entre ces deux pressions. Le signal envoyé peut être de type analogique ou utiliser le protocole SENT.

La première face 21 est en contact avec une première chambre 31, définie notamment par les parois de la cavité 5 et par la surface supérieure de la couche de résine.

La première chambre 31 est en communication de fluide, par l'intermédiaire d'un premier conduit 41, avec une première source de pression, par exemple un mélange de gaz d'échappement corrosifs, par exemple des vapeurs de dioxyde de carbone. La pression de cette première source peut ainsi s'exercer sur la première face 21, ce qui tend à bomber la membrane 16 vers le bas.

La deuxième face 22 est en contact direct avec une deuxième chambre 32 en communication de fluide, par l'intermédiaire d'un deuxième conduit 42, avec une deuxième source de pression, par exemple maintenue à la pression atmosphérique, soit 1013 hPa. La pression de cette deuxième source peut ainsi s'exercer sur la deuxième face 22, ce qui tend à bomber la membrane 16 vers le haut.

La déformation de la membrane 16 fournit ainsi une information sur la différence entre les première et deuxième pressions.

Dans le mode de réalisation de la figure 1, le premier conduit 41 traverse le substrat 14, dans le sens de l'épaisseur du substrat 14, puis la résine 50, pour déboucher dans la première chambre 31. La compacité du dispositif en est améliorée.

Dans le mode de réalisation de la figure 2, le premier conduit 41 débouche dans une chambre intermédiaire 51. Une cloison 52 permet à la cavité 12 de contenir le substrat 14 et la résine, et éviter qu'elle ne déborde vers le premier conduit 41. Un passage 54 est ménagé entre le sommet de la cloison 52 et le boîtier 5 afin d'assurer une communication de fluide entre la chambre intermédiaire 51 et la première chambre 31.

Le premier conduit 41 et/ou la cloison 52 peuvent être venus de matière avec le boîtier. La fabrication du dispositif en est simplifiée.

La cloison 52 est de préférence sensiblement verticale, le plan horizontal étant défini par la surface libre 56 de la résine.

Dans les deux modes de réalisation, les premier et deuxième conduits débouchent du même côté du boîtier 5, c'est-à-dire sur une même face du boitier, par exemple sur la face inférieure 60 du boîtier. Ils s'étendent de préférence, sensiblement parallèlement l'un à l'autre. Ils s'étendent de préférence selon des directions coplanaires. Dans un mode de réalisation, ils s'étendent sensiblement perpendiculairement à la surface libre 56 de la résine.

La fabrication et le fonctionnement découlent immédiatement de la description du dispositif qui précède.

L'invention n'est pas limitée à l'exemple de réalisation décrit et peut faire l'objet d'autres applications. En particulier, l'invention peut par exemple servir à suivre et à contrôler les émissions de particules dans un pot d'échappement afin de permettre leur régénération.

## Revendications

1. Dispositif de mesure de pression différentielle comprenant :
- un capteur de pression comportant un substrat (14) portant un organe de mesure de pression (10) pourvu d'une membrane (16) présentant des première et deuxième faces opposées, le capteur de pression étant configuré pour émettre un signal électrique en fonction d'une différence entre des première et deuxième pressions exercées sur lesdites première et deuxième faces, respectivement, le substrat portant des composants électroniques (18), lesdits composants électroniques étant recouverts par ladite résine;
- un boîtier (5) définissant une cavité (12) dans laquelle est disposé ledit capteur de pression, ladite cavité étant partiellement remplie d'une résine (50) de manière que ladite résine recouvre ledit substrat sans être en contact avec ladite membrane,
**caractérisé en ce que** le boîtier définit une chambre intermédiaire (51) dans laquelle débouche un premier conduit (41) en communication de fluide avec une première source de pression, la chambre intermédiaire étant séparée, par une cloison, de la cavité contenant le capteur de pression de manière que la résine versée dans la cavité pour recouvrir ledit substrat ne déborde pas dans ladite chambre intermédiaire, un passage (54) étant ménagé en partie supérieure de la cloison, ou au-dessus de la cloison, de manière à mettre en communication de fluide la chambre intermédiaire avec une première chambre (31) définie par ladite cavité et en contact avec la première face de la membrane.

2. Dispositif selon la revendication 1, dans lequel la cloison est venue de matière avec le boîtier.

3. Dispositif selon l'une quelconque des revendications précédentes, comportant des premier et deuxième conduits permettant une connexion à des première et deuxième sources de pression de manière à mettre en communication de fluide lesdites première et deuxième sources de pression avec les première et deuxième faces, respectivement, lesdits premier et deuxième conduits étant sur un même côté du boîtier.

4. Dispositif selon la revendication 3, lesdits premier et deuxième conduits s'étendant sensiblement perpendiculairement à la surface libre (56) de la résine.

5. Procédé de régulation d'un taux de recirculation de gaz d'échappement comprenant un dispositif selon l'une quelconque des revendications précédentes.

## Patentansprüche

1. Vorrichtung zur Messung des Differenzdrucks, umfassend :
- einen Drucksensor mit einem Substrat (14), das ein Druckmessorgan (10) trägt, das mit einer Membran (16) versehen ist, die eine erste und eine zweite gegenüberliegende Seite aufweist, wobei der Drucksensor so konfiguriert ist, dass er ein elektrisches Signal in Abhängigkeit von einer Differenz zwischen einem ersten und einem zweiten Druck, die jeweils auf die erste und die zweite Seite ausgeübt werden, ausgibt, wobei das Substrat elektronische Bauteile (18) trägt und die elektronischen Bauteile mit dem Harz beschichtet sind;
- ein Gehäuse (5), das einen Hohlraum (12) definiert, in dem der Drucksensor angeordnet ist, wobei der Hohlraum teilweise mit einem Harz (50) gefüllt ist, so dass das Harz das Substrat bedeckt, ohne mit der Membran in Kontakt zu sein,
**dadurch gekennzeichnet, dass** das Gehäuse eine Zwischenkammer (51) definiert, in die eine erste Leitung (41) in Fluidverbindung mit einer ersten Druckquelle mündet, wobei die Zwischenkammer durch eine Trennwand von dem Hohlraum getrennt ist, der den Drucksensor enthält, so dass das Harz, das in den Hohlraum gegossen wird, um das Substrat zu beschichten, nicht in die Zwischenkammer überläuft, wobei ein Durchgang (54) im oberen Teil der Trennwand oder oberhalb der Trennwand vorgesehen ist, um die Zwischenkammer mit einer ersten Kammer (31) in Fluidverbindung zu bringen, die durch den Hohlraum definiert ist und mit der ersten Seite der Membran in Kontakt steht.

2. Vorrichtung nach Anspruch 1, bei der die Trennwand aus einem Stück mit dem Gehäuse gefertigt ist.

3. Vorrichtung nach einem der vorhergehenden Ansprüche, mit einem ersten und einem zweiten Kanal, die eine Verbindung zu einer ersten und einer zweiten Druckquelle ermöglichen, um die erste und die zweite Druckquelle mit der ersten bzw. der zweiten Fläche in Fluidverbindung zu bringen, wobei sich der erste und der zweite Kanal auf derselben Seite des Gehäuses befinden.

4. Vorrichtung nach Anspruch 3, wobei sich die erste und die zweite Leitung im Wesentlichen senkrecht zur freien Oberfläche (56) des Harzes erstrecken.

5. Verfahren zur Regelung einer Abgasrückführrate, das eine Vorrichtung nach einem der vorhergehenden Ansprüche umfasst.

## Claims

1. Differential pressure measuring device comprising :
- a pressure sensor comprising a substrate (14) carrying a pressure-measuring member (10) provided with a diaphragm (16) having first and second opposite faces, the pressure sensor being configured to emit an electrical signal as a function of a difference between first and second pressures exerted on said first and second faces, respectively, the substrate carrying electronic components (18), said electronic components being coated by said resin;
- a housing (5) defining a cavity (12) in which said pressure sensor is disposed, said cavity being partially filled with a resin (50) so that said resin covers said substrate without contacting said membrane,
**characterized in that** the housing defines an intermediate chamber (51) into which opens a first conduit (41) in fluid communication with a first pressure source, the intermediate chamber being separated, by a partition, from the cavity containing the pressure sensor so that the resin poured into the cavity to coat said substrate does not overflow into said intermediate chamber, a passage (54) being provided at or above the top of the partition so as to place the intermediate chamber in fluid communication with a first chamber (31) defined by said cavity and in contact with the first face of the diaphragm.

2. Device according to claim 1, in which the partition is integral with the housing.

3. A device according to any of the preceding claims, comprising first and second conduits for connection to first and second pressure sources so as to bring said first and second pressure sources into fluid communication with the first and second faces, respectively, said first and second conduits being on the same side of the housing.

4. A device as claimed in claim 3, said first and second conduits extending substantially perpendicular to the free surface (56) of the resin.

5. A method of regulating an exhaust gas recirculation rate comprising a device according to any of the preceding claims.
